## Europäisches Patentamt
## European Patent Office
## Office européen des brevets

(11) Veröffentlichungsnummer: **0 421 920 A1**

# (12) EUROPÄISCHE PATENTANMELDUNG

(21) Anmeldenummer: **90810656.0**

(22) Anmeldetag: **30.08.90**

(51) Int. Cl.5: **B01D 24/24**

(30) Priorität: **02.10.89 CH 3578/89**

(43) Veröffentlichungstag der Anmeldung:
**10.04.91 Patentblatt 91/15**

(84) Benannte Vertragsstaaten:
**AT CH DE ES FR IT LI**

(71) Anmelder: **GEBRÜDER SULZER
AKTIENGESELLSCHAFT
Zürcherstrasse 9
CH-8401 Winterthur(CH)**

(72) Erfinder: **Gnieser, Jürgen
Dachslenstrasse 9
CH-8048 Zürich(CH)**
Erfinder: **Keller, Ernst
Wallrütistrasse 119
CH-8404 Winterthur(CH)**
Erfinder: **Widmayer, Siegfried
Seenerstrasse 184
CH-8404 Winterthur(CH)**

(54) **Drainagerohr für eine rückspülbare Drainagerohrfilteranlage.**

(57) Im oberen Teil eines Drainagerohres (3) sind in Richtung der Längsachse dieses Rohres (3) zwei Arten von Luftaustrittsöffnungen (8 und 15) über die ganze Rohrlänge gleichmässig verteilt, wobei die eine Art (15) der Luftaustrittsöffnungen (8 und 15) im Scheitel des Drainagerohres (3) angeordnet ist.

Dieses Oeffnungen (8 und 15) dienen der Zufuhr von Spülluft in die körnige Filtermasse (2).

Durch geeignete Aufteilung des Gesamtquerschnittes der Luftöffnungen (8 und 15) auf die beiden Arten entsteht bei der Einspeisung von Spülluft so in diesem oberen Teil des Rohres (3) ein Druckgaspolster, das eine Gleichverteilung der Spülluft auf die ganze Rohrlänge gewährleistet.

Die Oeffnungen (15) im Scheitelbereich stellen eine praktich vollständige Entlüftung des Drainagerohres (3) nach einer Spülung mit einem Luftanteil sicher. Dadurch wird eine ungenügende Entlüftung der Filtermasse (2) verhindert.

## DRAINAGEROHR FÜR EINE RÜCKSPÜLBARE DRAINAGEROHR-FILTERANLAGE

Die Erfindung betrifft ein Drainagerohr für eine rückspülbare Drainagerohr-Filteranlage zur Wasseraufbereitung, welches auf dem Boden des Filterbeckens abgestellt und von körniger Filtermasse umgeben ist, wobei im oberen Drittel des Drainagerohrs, in Richtung seiner Längsachse, Luftaustrittsöffnungen geringen Querschnitts gleichmässig verteilt sind.

Ein Drainagerohr der vorstehend genannten Art ist bekannt aus der CH-PS 668 559; in der Praxis hat sich gezeigt, dass die bei einer Rückspülung mit Luft und/oder einem Luft/Wasser-Gemisch in das Rohr eingeblasenen Luft während der nachfolgenden reinen Wasserspülung aus dem Rohr nicht vollständig entfernt werden kann. Diese nicht "entfernten" Lufteinschlüsse können während eines nachfolgenden Filtriervorganges zu sporadischen Luftausbrüchen in das Filtermedium hinein führen. Dadurch ergeben sich vor allem negative Auswirkungen auf den Filtrationsprozess.

Zum einen verursacht eine ungenügend entlüftete Filtermasse bekanntlich einen erhöhten Druckverlust. Da eine Rückspülung häufig bei Erreichen eines bestimmten Druckverlustes ausgelöst wird, können diese Luftausbrüche eine vorzeitige Spülung des Filters auslösen, ohne dass dafür aufgrund der Schmutzstoffbeladung des Filters eine Notwendigkeit besteht.

Zum anderen kann die aus den Drainagerohren sporadisch austretenden Restluft während des Filtrationsprozesses Kanäle im Filtermedium entstehen lassen, durch die die Filtrationswirkung verschlechtert wird.

Aufgabe der Erfindung ist es, ein Drainagerohr zu schaffen, das nach einer Rückspülung mit Luft oder einem Luft/Wasser-Gemisch praktisch vollständig entlüftet werden kann.

Diese Aufgabe wird mit der Erfindung dadurch gelöst, dass ein Teil dieser Luftaustrittsöffnungen entlang der höchsten Scheitellinie des Drainagerohres verteilt sind.

Ausser der angestrebten vollständigen Entlüftung des Drainagerohres soll in diesem bei einer Luft- bzw. Luft/Wasser-Spülung nach wie vor ein Druckgaspolster aufrechterhalten werden, um eine Gleichverteilung der Spülluft auf das ganze Filterfeld zu erreichen. Es ist daher darauf zu achten, dass die Durchmesser der verschiedenen Luftaustrittsöffnungen so aufeinander abgestimmt werden, dass ein solches Luftgaspolster gewährleistet ist. Dabei hat es sich als vorteilhaft erwiesen, wenn die Öffnungen im Scheitelbereich des Rohres höchstens ein Zehntel des Gesamtquerschnittes der Luftaustrittsöffnungen enthalten. Weiterhin hat sich gezeigt, dass beide geschilderten Forderungen an die Luftautrittsöffnungen optimal erfüllt werden können, wenn die Luftaustrittsöffnungen entlang der Scheitellinie des Rohres Durchmesser von 0,5 bis 3 mm haben, und wenn ferner pro Meter Rohrlänge 1 bis 12 Öffnungen in der Scheitellinie angeordnet sind, wobei gleichzeitig die restlichen Luftaustrittsöffnungen bei einer Anzahl von 5 bis 25 pro Meter Rohrlänge Durchmesser von 2 bis 8 mm aufweisen.

Bei der eingangs erwähnten bekannten Anlage ist das Drainagerohr über zwei getrennte, durch den Boden der Anlage geführte Rohre mit einem Filtrat-Sammelraum verbunden; eines dieser Rohre, das Verbindungsrohr, dient dabei dem Filtratabfluss und dem Spülwasserzufluss aus bzw. zu dem Drainagerohr, während durch das andere, das Belüftungsrohr, Spülluft in das Drainagerohr eingespeist wird. Diese Konstruktion ist aufwendig und erfordert pro Drainagerohr zwei Durchbrüche durch den im allgemeinen aus Beton bestehenden Boden des Filterbekkens. Nach einem weiteren Gedanken der Erfindung kann dieser Aufwand erheblich reduziert werden, wenn in das Verbindungsrohr ein Belüftungsrohr geringen Durchmessers eingesetzt ist, das den Mantel des Verbindungsrohres nahe der Decke des Sammelkanals durchdringt und oberhalb der Niveaulinie der tiefsten Luftaustrittsöffnungen des Drainagerohres endet.

Durch diese konstruktive Massnahme wird die Anzahl der Durchbrüche im Bodes des Beckens halbiert, da pro Drainagerohr nur noch das Verbindungsrohr für die "Wasserführung" in den Boden eingelegt werden muss. Um Spülung mit einem Luft/Wasser-Gemisch geeignete Mengenverhältnisse an Luft und Wasser in das Drainagerohr eintragen zu können, ist es vorteilhaft, wenn der Öffnungsquerschnitt des Belüftungsrohres zwischen 3 und 10 % desjenigen des Verbindungsrohres beträgt.

Im folgenden wird die Erfindung anhand eines Ausführungsbeispiels im Zusammenhang mit der Zeichnung näher erläutert.

Fig. 1 zeigt einen Schnitt I-I von Fig. 2 senkrecht zur Längsachse eines Drainagerohres;

Fig. 2 ist der Schnitt II-II von Fig. 1, während

Fig. 3 ein Schnitt durch ein Filterbecken ist, der parallel zur Längsachse der Drainagerohre verläuft.

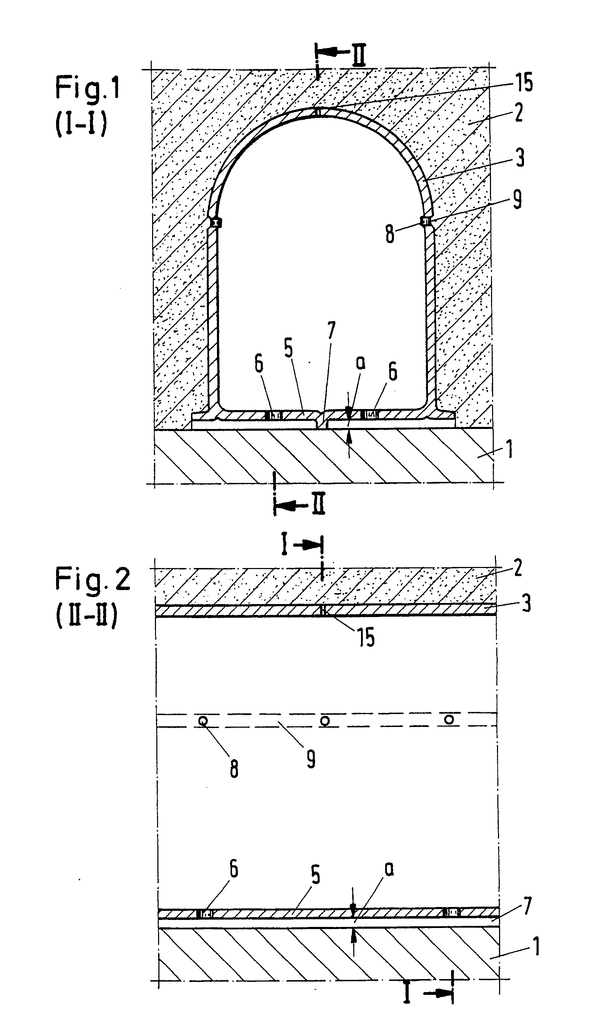

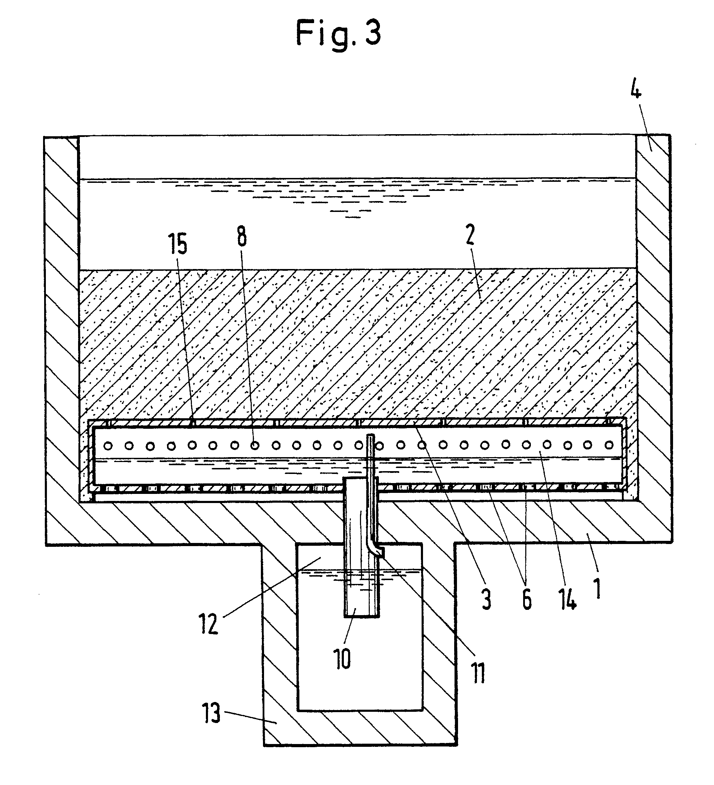

Ein Drainagerohr 3 ist auf dem Boden 1 eines Filterbekkens 4 (Fig. 3) abgestellt und beispielsweise durch im Boden verankerte nicht gezeigte Briden oder Rohrschellen fixiert. Das Rohr 3 hat einen rechteckigen Querschnitt, der nach oben durch eine gewölbte "Decke" abgeschlossen ist. Es ist eingebettet in eine körnige Filtermasse 2. Im Boden 5 des Rohres 3 sind in Richtung seiner Achse eine Reihe von Löchern 6 vorgesehen. In Längsrichtung des Rohres 3 zwischen oder seitlich neben diesen Löchern sind Rippen 7 angeordnet, durch die der Boden 5 in einem Abstand a (Fig. 1) vom Boden 1 des Beckens 4 gehalten wird.

Die Höhe h dieses Abstandes ist auf die Körnung der die Drainagerohre 3 im Filterbecken 4 umgebenden Filtermasse 2 so abgestimmt, dass keine Körner in das Drainagerohr 3 gelangen können. Die Filtermasse 2 kann sowohl aus einem Material einheitlicher Körnung als auch - was nicht ausdrücklich gezeigt ist - unter Umständen aus einem relativ feinkörnigen, ersten Material, dem eigentlichen Filtermaterial, und aus einer grobkörnigeren Stützschicht bestehen, in die die Draingerohre 3 eingebettet sind.

Durch den von körnigem Material 2 freien Abstand a und die Löcher 6 hindurch erfolgt im Filtrationsbetrieb die Drainage des Filtrates, im Spülbetrieb des Austritt des Spülwassers.

In beiden Seitenwänden der Drainagerohre 3 - etwa auf der Höhe des Basisdurchmessers der gewölbten Decke - sind in je einer in Richtung der Rohrachse verlaufenden Reihe erste Luftaustrittsöffnungen 8 angeordnet, aus denen im Spülbetrieb der Hauptanteil der Spülluft austritt. Ein Verstopfen einzelner dieser Oeffnungen 8 durch Körner der Filtermasse 2 verhindert eine den Oeffnungen 8 an der Aussenseite vorgelagerte Nut 9, die in ihrer Breite dem Durchmesser der Oeffnungen entspricht; dieser ist ebenfalls geringer als die Korngrösse des körnigen Filtermaterials in der Filtermasse 2.

Erfindungsgemäss verläuft im Scheitel der gewölbten Decke eine weitere Reihe von Luftaustrittsöffnungen 15, durch die hindurch das Draingerohr 3 nach einer Luft- und/oder einer Luft/Wasser-Spülung mindestens nahezu vollständig entlüftet werden kann.

Selbstverständlich ist die Erfindung nicht auf Rohre 3 mit gewölbtem oder dachfirstarigen Decken mit eindeutigen Scheitellinien beschränkt; bei Rohren mit anderen Decken sind die Oeffnungen 15 jeweils an der "höchsten" Stelle des Querschnittes angeordnet.

Zum einen sind die Löcher 6 für den Wasserdurchtritt und die Oeffnungen 8 und 15 für den Luftaustritt bezüglich ihrer Anzahl, Verteilung und Durchmesser derart aufeinander abgestimmt, dass während eines Luft/Wasser-Spülvorganges Luft und Wasser gleichzeitig aus den Drainagerohren 3 in die Filtermasse 2 austreten.

Zum anderen ist weiterhin der Gesamtöffnungsquerschnitt der Luftaustrittsöffnungen 8 und 15 so auf die beiden "Arten" der Oeffnungen 8 und 15 verteilt, dass im Rohr 3 ein Luftpolster aufrechterhalten wird, durch das eine Gleichverteilung der Luft über die ganze Rohrlänge sichergestellt wird.

In dem gezeigten Beispiel haben die Oeffnungen 15 einen Durchmesser von etwa 1,3 mm, die Oeffnungen 8 einen solchen von etwa 4 mm. Pro Meter Rohrlänge sind dabei 6-7 Oeffnungen 15 und 14 Oeffnungen 8 verteilt. Der Oeffnungsquerschnitt der Oeffnungen 15 beträgt somit etwa 1/20 desjenigen der Oeffnungen 8.

Fig. 3 zeigt ein Drainagerohr in einem Filterbecken 4 während der Rückspülphase des Filters. Für das Wegführen des Filtrates während des Filterbetriebes und zur Zuführung von Spülwasser während des Rückspülens sind sämtliche Drainagerohre 3 eines Beckens mit durch ihren Boden 5 geführten Verbindungsrohren 10 versehen, die durch den Boden 1 des Filterbeckens hindurch in einen Sammelkanal 13 führen. Der Sammelkanal 13 ist unter der Mitte der parallel zu den Drainagerohren verlaufenden Abmessung des Filterbeckens 4 angeordnet und erstreckt. sich über die ganze Filterlänge. Er ist an nicht gezeigte Zuführleitungen für Spülluft und Rückspülwasser angeschlossen.

Das Verbindungsrohr 10 endet nahe oder im Boden 5 des Draingerohres 3 und ermöglicht einerseits den Abzug des Filtrates aus dem Rohr 3, andererseits speist es die Drainagerohre 3 aus dem Kanal 13 mit Spülwasser.

Der Einspeisung der Spülluft auf den Kanal 13 in ein Drainagerohr 3 dient ein Belüftungsrohr 11 geringen Durchmessers, das in das Verbindungsrohr 10 eingesetzt ist und den Mantel des Verbindungsrohres 10 nahe der Decke des Sammelkanals 13 durchdringt; es endet oberhalb der Niveaulinie der tiefsten Luftaustrittsöffnungen 8 des Drainagerohres 3. Sein Querschnitt ist so bemessen, dass der Druckabfall in diesem Rohr 11 zur Bildung eines Druckluftpolsters 12 im Kanal 13 führt. Dieses Luftpolster sichert eine gleichmässige Luftverteilung auf sämtliche Drainagerohre 3 über die gesamte Filterlänge eines Filterfeldes. Im vorliegenden Beispiel beträgt der Querschnitt des Rohres 11 etwa 6 % desjenigen des Rohres 10.

Der Druckabfall an den Luftaustrittsöffnungen 8 und 15 eines Drainagerohres 3 führt zur Bildung des erwähnten Luftpolsters innerhalb dieses Rohres und gewährleistet damit eine gleichförmige Verteilung der Luft über die ganze Rohrlänge bzw. Filterbreite.

Bei einer Luft/Wasser-Spülung treten Wasser und Luft durch die Löcher 6 bzw. die Oeffnungen 8 und 15 gleichzeitig in die Filtermasse aus und spülen diese von ausfiltrierten Verunreinigungen frei; weiterhin gewährleisten die Austrittsöffnungen 15 im Scheitelbereich des Rohres 3 eine praktisch vollständige Entlüftung dieses Rohres, wenn zum Abschluss des Spülvorganges reines Wasser durch das Drainagerohr zum Ausspülen der restlichen Schmutzstoffe und/oder zum Trennen der Filtermedien, wenn es sich um einen Zwei- oder Mehr-schichtfilter handelt, geschickt wird.

**Ansprüche**

1. Drainagerohr für eine rückspülbare Drainagerohr-Filteranlage zur Wasseraufbereitung, welches auf dem Boden des Filterbeckens abgestellt und von körniger Filtermasse umgeben ist, wobei im oberen Drittel des Drainagerohrs, in Richtung seiner Längsachse, Luftaustrittsöffnungen geringen Querschnitts gleichmässig verteilt sind, dadurch gekennzeichnet, dass ein Teil (15) dieser Luftaustrittsöffnungen (8, 15) entlang der höchsten Scheitellinie des Drainagerohres (3) verteilt sind.

2. Drainagerohr nach Anspruch 1, dadurch gekennzeichnet, dass die Luftaustrittsöffnungen (15) entlang der Scheitellinie des Rohres (3) Durchmesser von 0,5 bis 3 mm haben, und dass ferner pro Meter (m) Rohrlänge 1 bis 12 Öffnungen (15) in der Scheitellinie angeordnet sind, wobei gleichzeitig die restlichen Luftaustrittsöffnungen (8) bei einer Anzahl von 5 bis 25 pro Meter Rohrlänge Durchmesser von 2 bis 8 mm aufweisen.

3. Drainagerohr nach Anspruch 2, dadurch gekennzeichnet, dass die Öffnungen (15) im Scheitelbereich des Rohres (3) höchstens ein Zehntel des Gesamtquerschnittes der Luftaustrittsöffnungen (8,15) enthalten.

4. Drainagerohr nach einem der Ansprüche 1 bis 3, mit einem nahe seinem Boden endenden, in einen unter dem Filterboden angeordneten Sammelkanal führenden Verbindungsrohr für den Filtratabzug, dadurch gekennzeichnet, dass in das Verbindungsrohr (10) ein Belüftungsrohr (11) geringen Durchmessers eingesetzt ist, das den Mantel des Verbindungsrohres (10) nahe der Decke des Sammelkanals (13) durchdringt und oberhalb der Niveaulinie der tiefsten Luftaustrittsöffnungen (8) des Drainagerohres (3) endet.

5. Drainagerohr nach Anspruch 4, dadurch gekennzeichnet, dass der Öffnungsquerschnitt des Belüftungsrohres (11) zwischen 3 und 10 % desjenigen des Verbindungsrohres (10) beträgt.

Fig.1
(I-I)

Fig.2
(II-II)

# Fig. 3

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-C-4 495 22   (W. PATERSON)(07-06-1930)<br>* Abbildungen 3,4; Seite 2 *<br>— — — | 1,3 | B 01<br>D 24/24 |
| Y,D | CH-A-6 685 59   (SULZER)(13-01-1989)<br>* Seiten 1-3 *<br>— — — | 1,3 | |
| Y | DE-C-6 473 68   (OSKAR BRANDES)(02-07-1937)<br>* Seite 2 *<br>— — — | 1 | |
| A | | 4 | |
| A | US-A-3 544 457   (FR.T. TULLEY)(01-12-1970)<br>— — — | | |
| A | US-A-1 998 279   (CH. HUNGERFORD)(16-04-1935)<br>— — — | | |
| A | US-A-1 747 470   (E.G. DUDEN)(18-02-1930)<br>— — — — — | | |

| RECHERCHIERTE SACHGEBIETE (Int. Cl.5) |
|---|
| B 01 D |

Der vorliegende Recherchenbericht wurde für alle Patentansprüche erstellt

| Recherchenort | Abschlußdatum der Recherche | Prüfer |
|---|---|---|
| Den Haag | 07 November 90 | DE PAEPE P.F.J. |